(19) Europäisches Patentamt
European Patent Office
Office européen des brevets

(11) **EP 4 009 216 A1**

(12) **EUROPÄISCHE PATENTANMELDUNG**

(43) Veröffentlichungstag:
**08.06.2022  Patentblatt 2022/23**

(21) Anmeldenummer: **20211068.0**

(22) Anmeldetag: **01.12.2020**

(51) Internationale Patentklassifikation (IPC):
**G06F 30/15** (2020.01)     **B60W 40/10** (2012.01)
**G06F 30/23** (2020.01)     G06F 119/14 (2020.01)

(52) Gemeinsame Patentklassifikation (CPC):
**G06F 30/15; B60W 40/107; B60W 40/109;**
**G06F 30/23;** G06F 2119/14

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(71) Anmelder: **Fraunhofer-Gesellschaft zur Förderung**
**der angewandten Forschung e.V.**
**80686 München (DE)**

(72) Erfinder:
• **Breitlauch, Pascal**
**01069 Dresden (DE)**
• **Erbsmehl, Christian Thomas**
**01069 Dresden (DE)**

(74) Vertreter: **Pfenning, Meinig & Partner mbB**
**Patent- und Rechtsanwälte**
**An der Frauenkirche 20**
**01067 Dresden (DE)**

(54) **VERFAHREN ZUM MODELLIEREN EINER KOLLISION ZWEIER KRAFTFAHRZEUGE**

(57)     Die vorliegende Erfindung betrifft ein Verfahren zum Modellieren einer Kollision zweier Objekte, bei dem jeweils ein eindimensionales bis dreidimensionales Gittermodell, das mehrere Gitterpunkte aufweist, für jedes der beiden deformierbaren Objekte generiert wird. Nachfolgend wird die Kollision durch eine iterative Berechnung einer plastischen Kompression bei einem Aufeinandertreffen der beiden Objekte mit den Gittermodellen durchgeführt, indem wirkende Kräfte durch vorab definierte mechanische Gleichungen simuliert werden, wobei zunächst die beiden Objekte mit initialer Geschwindigkeit aufeinander treffen und die von einer Deformation betroffenen Gitterpunkte jedes der beiden Objekte bestimmt werden und anschließend aus den von der Deformation betroffenen Gitterpunkten eine Richtung, ein Angriffspunkt und ein Betrag einer wirkenden Stoßkraft für jeden der Gitterpunkte abgeleitet wird sowie basierend auf der Berechnung der Stoßkraft für die Summe aller Gitterpunkte eine resultierende Beschleunigung für jedes der kollidierenden Objekte bestimmt wird und schließlich aus der Beschleunigung eine Geschwindigkeit und eine Position jedes der Objekte berechnet werden. Jeder der Gitterpunkte weist einen richtungsabhängigen und ortsabhängigen Energiewert oder einen energieäquivalenten Wert zum Abbilden steifer und weicher Bereiche des jeweiligen Objekts auf und der Energiewert oder der energieäquivalente Wert jedes der deformierten Gitterpunkte wird zur plastischen Deformationsenergie der jeweiligen Iteration addiert.

Fig. 3

**Beschreibung**

Die vorliegende Erfindung betrifft ein Verfahren zum Modellieren einer Kollision zweier Objekte.

Kollisionen zu simulieren stellt ein wichtiges Instrument beispielsweise in der Verkehrsunfallforschung dar. Sowohl in der Unfallrekonstruktion, bei der Effektivitätsbewertung von Fahrerassistenzsystemen als auch bei der Bewertung der Kritikalität von Crash-Konstellationen ist die Simulation einer Kollision notwendig. Aus diesem Grund existieren bereits folgende Methoden, einen Zusammenstoß von Fahrzeugen zu berechnen:
Die klassische Stoßtheorie rechnet sehr schnell, trifft jedoch keine Aussage zu Deformationen oder Beschleunigungen eines Fahrzeuges. Die Methode der Kraftrechnung rechnet schnell und ist in der Lage, Beschleunigungen und je nach Modell auch Deformationen zu berechnen. Jedoch verringern die verwendeten Fahrzeugsteifigkeiten eines solchen Modells häufig die Genauigkeit der Ergebnisse. Die Finite-Elemente-Methode (FEM) ist in der Lage, detaillierte und hochgenaue Ergebnisse wie Deformationen und Beschleunigungen zu berechnen, jedoch beträgt die Berechnungsdauer Stunden bis Tage.

Automobilhersteller bewerten den Nutzen ihrer Fahrerassistenzsysteme (FAS) anhand der Simulation von Unfallszenarien und der Verminderung der Unfallschwere. Zur Abschätzung der Unfallschwere fehlen jedoch derzeit schnelle und hinreichend genaue Simulationsmethoden, da Informationen über den Verlauf der Beschleunigung während der Kollision notwendig sind. Wie bereits erläutert, sind die vorhandenen Methoden zur Kollisionsberechnung entweder zu ungenau oder zu zeitaufwändig. Aus diesem Grund existieren verschiedenste Ansätze zur ausschließlichen Abschätzung des Beschleunigungsverlaufs während einer Kollision, z. B. in Varat, Michael S.; Husher, Stein E.: Crash Pulse Modeling for Vehicle Safety Research, in: The 18th ESV Conference Proceedings. Nagoya, Japan. 19.-22. Mai 2003. Diese können jedoch in keinem Fall auf einen beliebigen Unfall übertragen werden, sodass die Anwendung nur teilweise möglich ist.

Die erläuterten bisherigen Methoden der Kollisionsberechnung weisen große Differenzen zwischen geringer Genauigkeit sowie kurzer Berechnungsdauer und hoher Genauigkeit sowie langer Berechnungsdauer auf. Die Ansätze zur ausschließlichen Abschätzung von Beschleunigungen während einer Kollision sind nicht auf beliebige Situationen anwendbar. Demnach gibt es großen Forschungsbedarf, eine schnelle, detaillierte und vielseitig anwendbare Stoßberechnungsmethode zu entwickeln, welche auch Beschleunigungsverläufe berechnen kann.

Der vorliegenden Erfindung liegt daher die Aufgabe zugrunde, ein Verfahren zur Kollisionsberechnung vorzuschlagen, mit dem eine Kollision schnell, detailliert und realitätsnah berechnet werden kann.

Diese Aufgabe wird erfindungsgemäß gelöst durch ein Verfahren nach Anspruch 1. Vorteilhafte Ausgestaltungen und Weiterbildungen sind in den abhängigen Ansprüchen beschrieben.

Bei einem Verfahren zum Modellieren einer Kollision zweier Objekte wird jeweils ein eindimensionales bis dreidimensionales, also eindimensionales, zweidimensionales oder dreidimensionales, Gittermodell, das mehrere Gitterpunkte aufweist, für jedes der beiden deformierbaren Objekte generiert wird. Nachfolgend wird die Kollision durch eine iterative Berechnung einer plastischen Kompression bei einem Aufeinandertreffen der beiden Objekte mit den Gittermodellen durchgeführt, indem wirkende Kräfte durch vorab definierte mechanische Gleichungen simuliert werden, wobei zunächst die beiden Objekte mit initialer Geschwindigkeit aufeinander treffen und die von einer Deformation betroffenen Gitterpunkte jedes der beiden Objekte bestimmt werden und anschließend aus den von der Deformation betroffenen Gitterpunkten eine Richtung, ein Kraftangriffspunkt und ein Betrag einer wirkenden Stoßkraft für die Summe aller deformierten Gitterpunkte abgeleitet wird sowie basierend auf der Berechnung der Stoßkraft eine resultierende Beschleunigung für jedes der kollidierenden Objekte bestimmt wird. Schließlich werden aus der Beschleunigung eine Geschwindigkeit und eine Position jedes der Objekte berechnet. Jeder der Gitterpunkte weist einen richtungsabhängigen und ortsabhängigen Energiewert zum Abbilden steifer und weicher Bereiche des jeweiligen Objekts auf (d. h. jedem der Gitterpunkte wird dieser Wert zugeordnet) und der aus den Energiewerten der deformierten Gitterpunkte berechnete Stoßantrieb wird zum gesamten plastischen Kompressionsstoßantrieb der iterativen Berechnung addiert.

Ein Beispiel für eines der genannten Modelle ist in der Dissertation von Dr. Christian Thomas Erbsmehl, 2014, beschrieben. Anstelle von Energie-Modellen oder Energie-Äquivalent-Modellen können aber auch Steifigkeitsmodelle verwendet werden Durch die Berücksichtigung von richtungsabhängigen und ortsabhängigen Energiewerten beispielsweise aus dem Modell nach Erbsmehl können auch mechanische Eigenschaften wie Steifheit oder Weichheit besser modelliert werden, so dass das resultierende Modell nicht nur zuverlässiger die Realität abbildet, sondern insbesondere auch besser plastische Kompressionen darstellen kann. Dabei kommen als mechanische Gleichungen in der Regel die Stoßgesetze bzw. auf den jeweiligen Fall angepasste Stoßgesetze sowie kinetische und kinematische Gleichungen zur Anwendung. Sofern ein energieäquivalenter Wert verwendet wird, wird dieser vor dem Addieren zur plastischen Deformationsenergie noch in einen Energiewert umgerechnet.

Es kann auch vorgesehen sein, dass bei Kollision zweier Gittermodelle die Deformation der von der Kollision betroffenen Gitterpunkte bestimmt wird, indem eine Position der Gitterpunkte verglichen wird und bei einem Überlappen zweier Gitterpunkte der Gitterpunkt mit dem geringeren Energiewert als deformiert angesehen und in seinem Status verändert wird und der Gitterpunkt mit dem höheren Energiewert in seinem Energiewert um den Betrag des Energiewerts des Gitterpunkts mit dem niedrigeren Energiewert reduziert wird. Zusätzlich können auch umliegenden Gitterpunkte, die auch als Voxel, also als "Volumetric Pixel" bezeichnet werden, anteilig deformiert werden. So wird sichergestellt, dass nicht nur der Bereich einer direkten Intrusion defomiert wird, sondern auch die umliegenden Bereiche.

Als Kraftangriffspunkt für die Kollision kann ein Energieschwerpunkt aller deformierten Gitterpunkte definiert werden, um eine möglichst einfache, aber dennoch hinreichend genaue Modellierung zu erreichen.

Die Kraftrichtung wird hierbei typischerweise durch eine Kontaktebene definiert, wobei die Kraftrichtung senkrecht zu der Kontaktebene gerichtet ist und die Kontaktebene durch die am stärksten an der Kraftwirkung beteiligten Gitterpunkte beider Objekte aufgespannt wird.

Es kann vorgesehen sein, dass die resultierende Beschleunigung aus der Summe der Stoßkraft und mindestens einer äußeren Kraft, insbesondere einer Reibungskraft am Rad und bzw. oder einer Radaufstandskraft, berechnet wird, so dass auch gegebenenfalls die initiale Bewegung hindernde Kräfte berücksichtigt werden.

Typischerweise wird nach der iterativen Berechnung der plastischen Deformation ein Vorliegen einer Abbruchbedingung überprüft, wobei bei einem Vorliegen der Abbruchbedingung die iterative Berechnung der plastischen Kompression gestoppt wird und anderenfalls, d.h. wenn die Abbruchbedingung nicht erfüllt ist, die iterative Berechnung der plastischen Kompression basierend auf den berechneten Positionen und Geschwindigkeiten der Gitterpunkte der Objekte wiederholt wird.

Als Abbruchbedingung kann ein Übergang der plastischen Kompression zu einer elastischen Kompression gewählt werden, bei dem ein aufsummierter plastischer Stoßantrieb, insbesondere ein Kompressionsstoßantrieb, größer oder gleich einem vorab definierten Wert des maximal wirkenden plastischen Stoßantriebs bzw. Kompressionsstoßantriebs ist. Somit kann der gesamte Kollisionsvorgang besser simuliert werden, da die plastische Phase zeitlich begrenzt dargestellt ist und nachfolgend die elastische Phase beginnt. Der Stoßantrieb ist hierbei ein Integral der Stoßkraft über der Zeit. Dass der aufsummierte plastische Kompressionsstoßantrieb größer sein kann als der maximal wirkende plastische Kompressionsstoßantrieb resultiert aus der Iteration.

Es kann daher auch vorgesehen sein, dass nach der iterativen Berechnung der plastischen Kompression eine Berechnung der elastischen Kompression sowie einer elastischen Restitution, typischerweise nach dem Vorbild der iterativen Berechnung, durchgeführt wird, um die Kollision vollständig in allen Phasen zu simulieren.

Vorzugsweise wird als mindestens eines der Objekte ein Fahrzeug, besonders vorzugsweise ein Kraftfahrzeug angenommen. Es können aber natürlich auch beide Objekte als Fahrzeuge modelliert werden.

Außerdem können sich bei der Kollision beide Objekte bewegen, es kann aber auch vorgesehen sein, dass eines der Objekte ortsfest verbleibt und sich nur das andere Objekt bewegt.

Typischerweise ist eine Vorrichtung zum Durchführen des beschriebenen Verfahrens ausgebildet, d. h. das beschriebene Verfahren kann mit dieser Vorrichtung, beispielsweise einem Automatisierungssystem, einem Computer oder einer Recheneinheit, durchgeführt werden.

Ein Computerprogrammprodukt weist ein Computerprogramm auf, das Softwaremittel zum Durchführen des beschriebenen Verfahrens aufweist, wenn das Computerprogramm in einem Automatisierungssystem ausgeführt wird.

Ausführungsbeispiele der Erfindung sind in den Zeichnungen dargestellt und werden nachfolgend anhand der Figuren 1 bis 4 erläutert.

Es zeigen:

Fig. 1    eine schematische Ansicht eines eindimensionalen Stoßes;

Fig. 2    einen Verlauf einer Stoßkraft über der Zeit

Fig. 3    ein Ablaufdiagramm einer Iteration einer plastischen Kompression einer Stoßberechnungsmethode und

Fig. 4    eine schematische Darstellung eines Erstkontakts sowie eines Zwischenschritts einer Berechnung mit deformierten Gitterpunkten, Kraftangriffspunkt Kontaktebene und Stoßkraft.

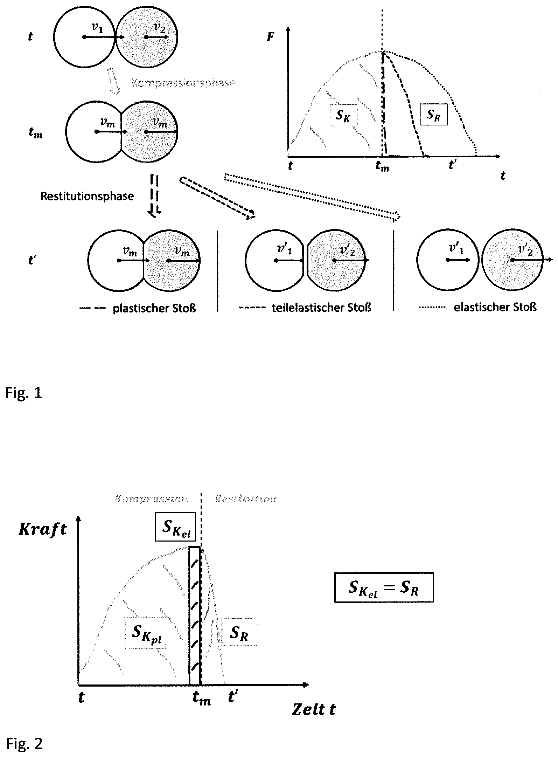

Zur erläuternden Erklärung des im Folgenden besprochenen Ausführungsbeispiels werden zunächst einige grundlegende physikalische Eigenschaften von Stößen diskutiert. Ein physikalischer Stoß lässt sich stets in Kompressions- und Restitutionsphase unterteilen, die in Figur 1 in einer schematischen Ansicht dargestellt sind. Dabei basiert die Restitution eines Objektes auf seiner Elastizität. Ist ein Objekt elastisch, so verformt es sich nach einer Belastung in die Ausgangsform zurück. Ein vollplastisches Objekt verbleibt dagegen in der belasteten Form. Die entsprechende Kompressionskraft und Restitutionskraft ist in Figur 1 in einem Diagramm schematisch dargestellt.

Beim Stoß eines Kraftfahrzeugs, beispielsweise eines Personenkraftfahrzeugs, mit einem anderen Fahrzeug überlagern sich elastische und plastische Anteile, sodass sich das Kraftfahrzeug nach der Belastung teilweise rückverformt und teilweise deformiert bleibt (teilelastischer Stoß). In typischen Modellen zur Darstellung und Berechnung von Fahrzeugkollisionen, beispielsweise den nachfolgend noch diskutierten EES-Modellen, wird oftmals nur eine plastische Verformung beschrieben. Mit dem im Folgenden näher beschriebenen Verfahren wird eine Kompressionsphase eines Zusammenstoßes bzw. einer Kollision in eine plastische Kompression $S_{Kpl}$ und eine elastische Kompression $S_{Kel}$ unterteilt, wie in Figur 2 in einem Diagramm dargestellt. Wiederkehrende Merkmale sind in dieser Figur wie auch in den weiteren Figuren mit jeweils identischen Bezeichnungen versehen. Hierbei werden über der Zeit die relevanten Kräfte aufgetragen. Die Phase der plastischen Kompression kann unter Nutzung bekannter Energy-Equivalent-Speed-Modelle (EES-Modelle) oder anderer Energie-Modelle bzw. Energie-Äquivalent-Modelle berechnet werden, während sich eine elastische Kompression und eine elastische Restitution $S_R$ unter Berücksichtigung der Stoßzahl $\varepsilon$ nach

$$S_R = \boldsymbol{S_{Kel}} = \frac{\varepsilon * S_{Kpl}}{1-\varepsilon}$$ ergeben.

Die nun noch näher vorgestellte Methode bzw. das näher erläuterte Verfahren umfasst die entwickelte und neuartige Methode zur Berechnung eines Zusammenstoßes zweier Energy Equivalent Speed (EES)-Modelle nach Erbsmehl (Erbsmehl, C.: Ein neues dreidimensionales Energy Equivalent Speed (EES)-Modell für Fahrzeuge basierend auf Unfalldaten; Dissertation, Dresden, 2014) oder anderer Energie-Modelle bzw. Energie-Äquivalent-Modelle. Die Methode berechnet den Zusammenstoß zweier EES-Modelle durch explizite und iterative Berechnung von Deformation und resultierender Stoßkraft. Das wesentliche Unterscheidungsmerkmal zu bisherigen Methoden ist die Berechnung der Stoßkraft aus Deformationsenergie. Dabei basiert die Deformationsenergie auf den deformierten Energie-Modellen bzw. Energie-Äquivalent-Modellen wie beispielsweise EES-Modellen nach Erbsmehl.

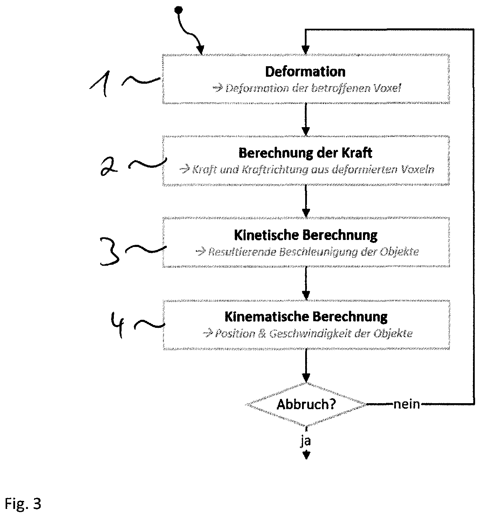

Wie in Figur 3 in einem Ablaufdiagramm dargestellt, werden hierbei mehrere Schritte durchlaufen. Der Ansatz der entwickelten Berechnungsmethode für die plastische Kompressionsphase basiert auf einer Zerlegung in kleine Zeitschritte $t_{Step}$, die auch Iterationsschritte genannt werden. Prinzipiell kann jedoch auch nur ein einziger Iterationsschritt durchlaufen werden. Dabei werden in jedem Iterationsschritt mechanische Grundsätze bzw. mechanische Gleichungen angewandt, um die Stoßkräfte auf die stoßenden Objekte wirken zu lassen. Die mechanischen Grundsätze sind dabei im Wesentlichen die Stoßgesetze sowie kinetische und kinematische Gleichungen. Zusätzlich kann der Ablauf eines einzelnen Iterationsschrittes in vier Teilschritte untergliedert werden, wie in Figur 3 dargestellt. Hierzu werden zunächst die beiden zur Kollision zu bringenden Objekte als mathematische dreidimensionale Gitter dargestellt, also als eine Menge von Gitterpunkten mit definierten Eigenschaften.

In einem ersten Schritt 1, der auch als Deformationsschritt bezeichnet wird, treffen die kollidierenden Objekte mit initialer Geschwindigkeit am Kollisionsort ein, sodass es zu einer Eindringung kommt. In der Folge wird identifiziert, welche der Gitterpunkte bzw. Voxel (Volumetric Pixel) eines Modells der Objekte in diesem Iterationsschritt deformiert werden müssen. Bei der Kollision mit einem starren Objekt werden beispielsweise alle Voxel deformiert, die in die Geometrie des starren Körpers eindringen. Die genauen Regeln bzw. Abläufe dieses Schritts werden nachfolgend noch erläutert.

In einem zweiten Schritt 2, dem Kraftberechnungsschritt, werden auf Grundlage der deformierten Voxel die Richtung und der Betrag der in diesem Iterationsschritt wirkenden Stoßkraft abgeleitet bzw. berechnet. Diese Kraft wirkt wiederum auf die kollidierenden Objekte. Nach physikalisch anerkannten kinetischen Zusammenhängen werden die resultierenden Beschleunigungen der Objekte berechnet, was in einem dritten Schritt 3, dem Schritt der kinetischen Berechnung erfolgt.

Die errechneten Beschleunigungen wirken über kinematische Zusammenhänge auf die Geschwindigkeit und die Position der Objekte ein. Dies wird in einem vierten Schritt 4, dem Schritt der kinematischen Berechnung, ermittelt. Nach einer abschließenden Prüfung der Abbruchbedingung kann gegebenenfalls der nächste Iterationsschritt beginnen. Dieser basiert nun auf den soeben neu berechneten Positionen und Geschwindigkeiten der Objekte, wodurch eventuell erneut Voxel deformiert werden. Der dargestellte Ablauf wird so lang wiederholt, bis die Abbruchbedingung erfüllt ist, wobei theoretisch auch bereits nach einem einzigen Durchlauf die Abbruchbedingung erreicht sein kann.

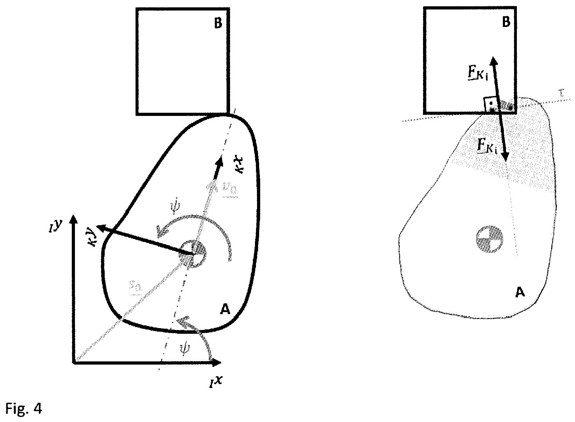

Um im Deformationsschritt 1 die zu deformierenden Voxel eines Voxel-Modells zu identifizieren, wird die Position der Voxel geprüft. Befindet sich ein Voxel eines Modells eines der Objekte innerhalb eines starren, nicht deformierbaren Objektes, so wird dieses deformiert. Überlappen sich zwei Voxel zweier stoßender Voxel-Modelle, so werden die Energiewerte beider Voxel verglichen. Das Voxel mit dem geringeren Energiewert wird deformiert, während der Energiewert des verbleibenden Voxels um den Energiewert des deformierten Voxels verringert wird. Zusätzlich werden auch umliegende Voxel, die nicht direkt im Eingriff stehen, anteilig deformiert. So wird sichergestellt, dass nicht nur der Bereich der direkten Intrusion deformiert wird, sondern auch die umliegenden Bereiche. Eine entsprechende Berechnung ist in Figur 4 schematisch dargestellt.

$$\frac{1}{2}m * EES^2 = E_{Def}$$

Da jedes Voxel einen EES-Wert enthält, kann nach bei bekannter Masse m des Objektes der Energieinhalt $E_V$ jedes Voxels berechnet werden. Dabei können die Energiewerte eines Modells richtungsabhängig und ortsabhängig variieren, wodurch steife und weiche Bereiche eines realen Objekts realistisch abgebildet werden.

Anschließend wird der Energieinhalt $E_V$ jedes deformierten Voxels zur gesamten plastischen Deformationse-nergie $E_{Def_i}$ dieser Iteration addiert. Der Betrag der daraus resultierenden Stoßkraft kann mit $F_{K_i} = \frac{E_{Def_i}}{s_i}$ berechnet werden und ist ein weiteres besonderes technisches Merkmal der entwickelten Methode. Dabei ist der Weg $s_i$ durch den während $t_{Step}$ entstandenen Überlappungsweg definiert.

Zur vollständigen Definition des Kraftvektors fehlen bisher noch der Kraftangriffspunkt und die Richtung: Der Kraftangriffspunkt wird definiert als Energieschwerpunkt *COE* aller deformierter Voxel. Er kann unter Berücksichti-gung des Mittelpunktes $\underline{s}_V$ jedes deformierten Voxels durch $\underline{COE} = \frac{\sum_{def}(E_V * \underline{s}_V)}{\sum_{def} E_V}$ berechnet werden.

Die Kraftrichtung wird definiert durch eine Kontaktebene $\tau$, wobei die Kraft stets senkrecht zur Kontaktebene steht. Zur Definition der Kontaktebene sind in der Ebene zwei Punkte und im Raum drei Punkte notwendig. Alle Punkte werden durch die Mittelpunkte der Voxel gegeben, die den höchsten deformierten Energiebetrag aufweisen. Die Kontaktebene wird dementsprechend durch die am stärksten an der Kraftwirkung beteiligten Punkte beider Objekte aufgespannt.

Anschließend wird die aus $\underline{F}_{K_i}$ resultierende Beschleunigung eines Objektes durch kinetische Zusammenhänge berechnet.

Zusätzlich zur Stoßkraft können äußere Kräfte wie beispielsweise auch die Vektoren der vier Radaufstands-kräfte $F_{N_j}$ und der daraus resultierenden vier Reibkräfte $F_{R_j}$ berücksichtigt werden. Die Vektoren $\underline{r}_{Rad_j}$ vom Schwerpunkt zu den Radaufstandspunkten sind ebenfalls notwendig. Mit dem Schwerpunktsatz und dem Drallsatz können die resul-tierende Beschleunigung $\underline{a}_j$ und die resultierende Winkelbeschleunigung $\underline{\beta}_i$ nach folgenden Formeln berechnet werden:

$$m_A * \underline{a}_i = \underline{F}_{K_i} + m_A * \begin{pmatrix} 0 \\ 0 \\ -g \end{pmatrix} \qquad \text{resultierende Beschleunigung (dreidimensional)}$$
$$+ \sum F_{N_j} + \sum F_{R_j}$$

$$\Theta_{zz} * \underline{\ddot{\beta}}_i = \left( \underline{r}_{F_{K_i}} \times \underline{F}_{K_i} \right) \qquad \text{resultierende Winkelbeschleunigung (dreidimensional)}$$
$$+ \sum \left( \underline{r}_{Rad} \times F_{N_j} \right)$$
$$+ \sum \left( \underline{r}_{Rad} \times F_{R_j} \right)$$

Anschließend werden die Objekte innerhalb der Zeit $t_{Step}$ unter Wirkung der resultierenden Beschleunigung und unter Nutzung der folgenden kinematischen Gleichungen weiterbewegt:

$$t_i = t_{i-1} + t_{Step} \qquad \text{neuer Zeitstempel}$$

$$\underline{a}_i = konstant \qquad \text{konstante Beschleunigung während des Iterationsschrittes}$$

$$\underline{v}_i = \underline{a}_i * t_{Step} + \underline{v}_{i-1} \qquad \text{Geschwindigkeit am Ende der Iteration}$$

$$\underline{s}_i = \underline{a}_i * \frac{t_{Step}^2}{2} + \underline{v}_{i-1} * t_{Step} \qquad \text{neue Position am Ende der Iteration}$$
$$+ \underline{s}_{i-1}$$

Sowohl die Geschwindigkeit als auch die Position von Objekt A verändern sich und schaffen neue Ausgangsbedingungen für den nächsten Iterationsschritt.

Nach der kinematischen Berechnung erfolgt die Prüfung der Abbruchbedingung. Diese bestimmt den Übergang von plastischer Kompression zu elastischer Kompression. Wie bereits erläutert, ist der Übergang zwischen den Phasen definiert durch die Stoßkraft bzw. den plastischen Stoßantrieb $S_{Kpl}$, welcher mit dem bisher umgesetzten und aufsummierten Stoßantrieb $S_{current}$ verglichen wird:

$$S_{current} \geq 0.95 * S_{Kpl} \quad \text{erste Abbruchbedingung}$$

Ist der bereits umgesetzte Stoßantrieb des gesamten Stoßes größer oder gleich 95 % des plastischen Kompressions-antriebs, so wird die plastische Kompression abgebrochen. Ist dies nicht der Fall, wird in den nächsten Iterationsschritt eingestiegen.

Die erste Abbruchbedingung setzt voraus, dass die stoßenden Objekte eine identische Geschwindigkeit im Stoßpunkt erreichen. Bei Abgleitkollisionen wird diese Bedingung jedoch nicht erfüllt. Es ist demnach notwendig, einen Übergang von Phase I, d. h. der plastischen Kompression, zu Phase II, d. h. der elastischen Kompression, zu detektieren, sobald sich die stoßenden Objekte voneinander lösen. Daher kann in einem weiteren Ausführungsbeispiel eine zweite Abbruchbedingung definiert werden, die eine Prognose der Geschwindigkeiten am Ende des nächsten Iterationsschritts verwendet. Auf Grundlage der prognostizierten Geschwindigkeiten wird geprüft, ob sich die beteiligten Objekte am Ende des nächsten (prognostizierten) Iterationsschritts voneinander lösen. Werden sich die Objekte voneinander wegbewegen, so muss die plastische Kompressionsphase nach dem aktuellen Iterationsschritt beendet werden. Der in Phase II und III, der Restitutionsphase, umgesetzte Stoßantrieb wird dann aus dem bekannten (abgeschlossenen) plastischen Kompressionsantrieb und der vorgegebenen Stoßzahl $\varepsilon$ errechnet.

Nach Abbruch der Phase der plastischen Kompression beginnt die Phase der elastischen Kompression (Phase II). Analog zum Vorgehen während der plastischen Kompression wird aus dem Stoßantrieb nach unter Berücksichtigung von $t_{Step}$ der Betrag $F_{Kel}$ der Stoßkraft der elastischen Kompression berechnet. Zudem wird angenommen, dass sich Richtung und Kraftangriffspunkt seit der letzten Iteration der plastischen Kompression nicht verändert haben, sodass der Kraftvektor $\underline{E}_{Kel}$ bekannt ist. Daraus wird erneut die resultierende Beschleunigung berechnet und beide Objekte während $t_{Step}$ weiterbewegt.

Abschließend erfolgt der Übergang in die elastische Restitutionsphase (Phase III). Für diese Phase wird die gleiche Berechnungsvorschrift genutzt, wie für Phase II. Am Ende von Phase III trennen sich beide Objekte voneinander. Eine beliebige kinetische Simulation kann angewendet werden, um bis in die Endlagen der Objekte zu simulieren.

Für die entwickelte Methode nicht relevant, auf wie viele Zeitschritte (Iterationen) die elastische Kompression und die elastische Restitution verteilt werden. Das Minimum ist je eine Iteration pro Phase, d. h. mit einem Durchlauf des beschriebenen Verfahrens ist bereits die angestrebte Modellierung möglich. Der Schwerpunkt der entwickelten Methode liegt auf der Phase der plastischen Kompression, welche durch EES-Modelle oder andere Energie-Modelle bzw. Energie-Äquivalent-Modelle berechenbar wird.

Das beschriebene Modell kann beispielsweise als Software auf einem Computer oder einer sonstigen Recheneinheit ablaufen bzw. als Computerprogrammprodukt vorliegen, das Softwaremittel aufweist, um das beschriebene Verfahren bzw. die beschriebene Methode durchzuführen, wenn das Computerprogramm auf der Recheneinheit ausgeführt wird.

Diese Stoßberechnungsmethode ermöglicht die Nutzung beliebiger EES-Modelle oder anderer Energie-Modelle bzw. Energie-Äquivalent-Modelle, welche auch richtungsabhängig und ortsabhängig unterschiedlich hohe Energiewerte enthalten können. Dadurch entsteht der Vorteil einer möglichen richtungsabhängigen und ortsabhängigen Berechnung je nach Modell.

Zudem ist die Berechnung der Stoßkraft auf Basis der Deformationsenergie möglich. Weiterhin ist auch die Berechnung des Kraftangriffspunktes relevant. Durch die Berechnung mittels Deformationsenergien ist die entwickelte Methode in der Lage, schnell umfangreiche Ergebnisse zu berechnen. Dies ist der wichtigste Vorteil der Methode und unterscheidet diese von anderen Methoden.

Die entwickelte Stoßberechnungsmethode kann vor allem im Bereich der Fahrzeug- und Verkehrssicherheit verwendet werden. Folgende Beispiele der Verwendung sind denkbar:

- Sachverständige zur Unfallrekonstruktion können die entwickelte Methode verwenden, um Verkehrsunfälle zu rekonstruieren und zur Kollision passende EES-Werte zu erhalten. Diese werden für die Bestimmung der Kollisionsgeschwindigkeit und der Ausgangsgeschwindigkeit der Unfallbeteiligten benötigt. Durch die exakte Rekonstruktion von Verkehrsunfällen steigt die Qualität die Datenbasis, auf der die Entwicklung von unfallvermeidenden oder Unfallschwere verringernden Systemen basiert.
- Hersteller von Fahrerassistenzsystemen (FAS) können mit Hilfe der Beschleunigungsverläufe die Unfallschwere einer Kollision abschätzen. Damit wird eine Beurteilung des Nutzens ihres entwickelten FAS möglich. So können möglichst effektive FAS in den Markt eingeführt werden, welche die Sicherheit im Straßenverkehr deutlich erhöhen.
- Durch wiederholte Simulation verschiedenster Kollisionskonstellationen zwischen Pkw können kritische Konstellationen identifiziert werden. Diese können dann von Verbraucherschutzorganisationen wie Euro NCAP gezielt getestet werden und somit die Fahrzeugsicherheit vorantreiben.

Lediglich in den Ausführungsbeispielen offenbarte Merkmale der verschiedenen Ausführungsbeispiele können miteinander kombiniert und einzeln beansprucht werden.

## Patentansprüche

1. Verfahren zum Modellieren einer Kollision zweier Objekte, bei dem jeweils ein eindimensionales bis dreidimensionales Gittermodell, das mehrere Gitterpunkte aufweist, für jedes der beiden deformierbaren Objekte generiert wird, und
nachfolgend die Kollision durch eine iterative Berechnung einer plastischen Kompression bei einem Aufeinandertreffen der beiden Objekte mit den Gittermodellen durchgeführt wird, indem
wirkende Kräfte durch vorab definierte mechanische Gleichungen simuliert werden, wobei
zunächst die beiden Objekte mit initialer Geschwindigkeit aufeinander treffen und die von einer Deformation betroffenen Gitterpunkte jedes der beiden Objekte bestimmt werden und
anschließend aus den von der Deformation betroffenen Gitterpunkten eine Richtung, ein Angriffspunkt und ein Betrag einer wirkenden Stoßkraft für die Summe aller Gitterpunkte abgeleitet wird sowie
basierend auf der Berechnung der Stoßkraft eine resultierende Beschleunigung für jedes der kollidierenden Objekte bestimmt wird und
schließlich aus der Beschleunigung eine Geschwindigkeit und eine Position jedes der Objekte berechnet werden, **dadurch gekennzeichnet, dass**
jeder der Gitterpunkte einen richtungsabhängigen und ortsabhängigen Energiewert oder einen energieäquivalenter Wert zum Abbilden steifer und weicher Bereiche des jeweiligen Objekts aufweist und der Energiewert oder der energieäquivalente Wert jedes der deformierten Gitterpunkte zur plastischen Deformationsenergie der jeweiligen Iteration addiert wird.

2. Verfahren nach Anspruch 1, **dadurch gekennzeichnet, dass** die Deformation der von der Kollision betroffenen Gitterpunkte bestimmt wird, indem eine Position der Gitterpunkte verglichen wird und bei einem Überlappen zweier Gitterpunkte der Gitterpunkt mit dem geringeren Energiewert als deformiert angesehen wird und der Gitterpunkt mit dem höheren Energiewert in seinem Energiewert um den Betrag des Energiewerts des Gitterpunkts mit dem niedrigeren Energiewert reduziert wird.

3. Verfahren nach Anspruch 1 oder Anspruch 2, **dadurch gekennzeichnet, dass** als Kraftangriffspunkt für die Kollision ein Energieschwerpunkt aller deformierter Gitterpunkte definiert wird.

4. Verfahren nach Anspruch 3, **dadurch gekennzeichnet, dass** die Kraftrichtung durch eine Kontaktebene definiert wird, wobei die Kraftrichtung senkrecht zu der Kontaktebene gerichtet ist und die Kontaktebene durch die am stärksten an der Kraftwirkung beteiligten Gitterpunkte beider Objekte aufgespannt wird.

5. Verfahren nach einem der vorhergehenden Ansprüche, **dadurch gekennzeichnet, dass** die resultierende Beschleunigung aus der Summe der Stoßkraft und mindestens einer äußeren Kraft, insbesondere einer Reibungskraft am Rad und/oder einer Radaufstandskraft, berechnet wird.

6. Verfahren nach einem der vorhergehenden Ansprüche, **dadurch gekennzeichnet, dass** nach der iterativen Berechnung der plastischen Deformation ein Vorliegen einer Abbruchbedingung überprüft wird, wobei bei einem Vorliegen der Abbruchbedingung die iterative Berechnung der plastischen Kompression gestoppt wird und anderenfalls die iterative Berechnung der plastischen Kompression basierend auf den berechneten Positionen und Geschwindigkeiten der Gitterpunkte der Objekte wiederholt wird.

7. Verfahren nach einem der vorhergehenden Ansprüche, **dadurch gekennzeichnet, dass** als Abbruchbedingung ein Übergang der plastischen Kompression zu einer elastischen Kompression gewählt wird, bei dem ein aufsummierter plastischer Stoßantrieb größer oder gleich einem vorab definierten Wert eines maximal wirkenden Stoßantriebs ist.

8. Verfahren nach einem der vorhergehenden Ansprüche, **dadurch gekennzeichnet, dass** nach der iterativen Berechnung der plastischen Kompression eine Berechnung der elastischen Kompression und einer elastischen Restitution durchgeführt wird.

9. Vorrichtung zum Durchführen eines Verfahrens nach einem der Ansprüche 1 bis 8.

10. Computerprogrammprodukt mit einem Computerprogramm, das Softwaremittel zum Durchführen eines Verfahrens nach einem der Ansprüche 1 bis 8 aufweist, wenn das Computerprogramm in einem Automatisierungssystem ausgeführt wird.

Fig. 1

$$S_{K_{el}} = S_R$$

Fig. 2

Fig. 3

Fig. 4

**Europäisches Patentamt**
**European Patent Office**
**Office européen des brevets**

## EUROPÄISCHER RECHERCHENBERICHT

Nummer der Anmeldung

EP 20 21 1068

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | WAGNER M ET AL: "Automated crash computation of passenger car accidents based on the GIDAS database", 23. EVU CONFERENCE, COPENHAGEN, [Online] 14. Dezember 2014 (2014-12-14), XP055801142, Gefunden im Internet: URL:https://bast.opus.hbz-nrw.de/files/1362/19_Wagner_Automated_Crash_Computation.doc.pdf> [gefunden am 2021-05-03] * Zusammenfassung * * Seite 2, Absatz 2 - Absatz 3 * * Abbildungen 3,5,8, 11-12, 15 * * das ganze Dokument * ----- | 1-10 | INV. G06F30/15 B60W40/10 G06F30/23 ADD. G06F119/14 |
| A | ERBSMEHL CHRISTIAN T: "A METHOD TO ESTIMATE DEFORMATION ENERGY LEVELS OF BATTERY AND FUEL CELL SYSTEMS DEPENDING ON THEIR LOCATION BY USING REAL ACCIDENT DATA (GIDAS)", CONFERENCE PROCEEDINGS OF THE 23RD ESV, SEOUL, [Online] 30. Mai 2013 (2013-05-30), XP055801139, Gefunden im Internet: URL:https://www-esv.nhtsa.dot.gov/Proceedings/23/files/23ESV-000444.PDF> [gefunden am 2021-05-03] * Zusammenfassung * * Abbildungen 9,12-14,16, 31-34 * * das ganze Dokument * ----- | 1-10 | RECHERCHIERTE SACHGEBIETE (IPC) G06F B60W |

Der vorliegende Recherchenbericht wurde für alle Patentansprüche erstellt

| Recherchenort | Abschlußdatum der Recherche | Prüfer |
|---|---|---|
| München | 4. Mai 2021 | Dapp, Wolfgang |

EPO FORM 1503 03.82 (P04C03)

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **VARAT, MICHAEL S. ; HUSHER, STEIN E.** Crash Pulse Modeling for Vehicle Safety Research. *The 18th ESV Conference Proceedings,* 19. Mai 2003